# EUROPEAN PATENT SPECIFICATION

(11) **EP 1 569 506 B1**
(45) Date of publication and mention of the grant of the patent: **05.03.2008**
(21) Application number: 03762950.8
(22) Date of filing: 02.07.2003
(51) Int. Cl.: A01B 21/08

(54) **A SOIL TILLAGE ENTITY WITH ANGLED DISCS**
BODENBEARBEITUNGSEINHEIT MIT ABGEWINKELTEN SCHEIBEN
DISPOSITIF DE TRAVAIL DU SOL AVEC DES DISQUES OBLIQUES

(30) Priority: 05.07.2002 SE 0202129
(43) Date of publication of application: 07.09.2005
(73) Proprietor: Väderstad-Verken AB, 590 21 Väderstad (SE)
(72) Inventor: GILSTRING, Gert, 590 21 Väderstad (SE)
(74) Representative: Stein, Jan Anders Lennart
(86) International application number: PCT/SE2003/001149
(87) International publication number: WO 2004/004437

(56) References cited:
- WO-A1-00/74464
- US-A- 3 675 725

## Description

### BACKGROUND OF THE INVENTION

The present invention relates to a soil tillage entity comprising at least two essentially horizontal beams intended to be arranged at an angle to the direction of travel during soil tillage, at least one disc entity with a disc for soil tillage arranged on the respective beam, wherein the said discs are arranged essentially behind one another in the direction of travel for interacting soil tillage, and wherein the angle of at least one of the discs relative to the direction of travel is adjustable.

The invention also relates to agricultural machine comprising such a soil tillage entity.

Such a soil tillage and such an agricultural machine entity are known through EP-A-0 428 198, which describes the adjustment of the angle of the disc relative to the direction of travel (also called cutting angle) by turning one or several disc entities around a vertical axle. This turning can be performed for one disc entity separately or several together. The soil tillage entity described is disadvantageous because it requires a large number of axles journalled in bearings.

WO-A-00/74464 discloses a soil tillage entity that allow adjustment of the relative lateral positions of discs in two rows of discs arranged behind on another in the direction of travel. It is also known to turn the disc entity around a horizontal axle in order to affect the working depth in the soil. This occurs e.g. on toolbars for seed drills and following harrows for cultivators.

### SUMMARY OF THE INVENTION

One of the objects of the present invention is to create a soil tillage entity with improved design with respect to the adjustment of the disc entities.

This has been achieved by a soil tillage entity of the initially defined type, wherein a a turning device is adapted to turn at least one of the disc entities, around an essentially horizontal axle for adjustment of the tillage angle of the discs, and that a displacing device is adapted to displace at least one of the disc entities essentially along the lengthwise extension of the said beam, for adjustment of the tillage position of the discs relative to one another, wherein the axle of rotation of the disc entity and the axis of rotation of its disc are not parallel. Accordingly, the angle between the axle of rotation of the disc entity and the axis of rotation of its disc is more than 0°. Hereby is achieved a less cost-demanding construction, which also has a simplified adjustment of the discs.

The said displacement preferably occurs for at least one disc entity in one movement together with the turning. Alternatively the said displacement occurs for at least one of the said disc entities separately from the said turning. Hereby are achieved two alternative adjustment possibilities with different degrees of rationalisation.

The turning device suitably comprises at least one turning means for execution of the turning movement. The displacing device further comprises at least one lateral displacement member for execution of the displacing movement. Hereby the turning movement and the displacing movement can be executed by means of remote control, either from the agricultural implement or from the tractor.

At least one lateral displacement member is arranged in such a way that the said turning and the said displacing are executed in one movement. The adjustment is hereby rationalised further.

There is preferably a turning means for execution of the turning movement and the displacing movement. Hereby, simultaneous displacing and turning can be executed by means of remote control rather than manually.

Suitably the turning device is adapted to turn one disc entity and the displacing device is adapted to displace the other disc entity.

Alternatively, the turning device is adapted to turn one disc entity and the displacing device is adapted to displace the same disc entity.

Alternatively, the turning device is adapted to turn and displace both the one and the other disc entity.

### DRAWING SUMMARY

In the following, the invention is described in more detail with reference to the attached drawings in which:
Figure 1 is a perspective view of an agricultural machine comprising a soil tillage entity according to the invention,
Figure 2 is a perspective view the soil tillage entity shown in Figure 1 and also definition of cutting angle and angle of incline,
Figure 3 is a view from above of a part of the soil tillage entity shown in Figure 2 and also definition of the cutting angle,
Figures 4a and 4b illustrate in different perspectives a part of the soil tillage entity shown in Figure 2 and also definition of angle of incline,
Figure 5 is a side view of the first embodiment of a pair of interacting disc entities on a soil tillage entity,
Figure 6 illustrates a second embodiment of a pair of interacting disc entities,
Figure 7 illustrates a third embodiment of a pair of interacting disc entities,
Figure 8 illustrates a fourth embodiment of a pair of interacting disc entities,
Figure 9 illustrates a fifth embodiment of a pair of interacting disc entities,
Figure 10 illustrates a sixth embodiment of a pair of interacting disc entities,
Figures 11a and 11b illustrate a seventh embodiment of a pair of interacting disc entities,
Figure 12 illustrates the effect of the soil tillage entity on the soil, and also definition of tillage position,
Figures 13a - 13c illustrate adjustment of the cutting angle,
Figures 14a - 14c illustrate adjustment of the angle of incline,
Figure 15 illustrates an embodiment of separate adjustment of tillage position and cutting angle,
Figure 16 illustrates an alternative embodiment of separate adjustment of tillage position and cutting angle,
Figures 17a - 17b illustrate an alternative embodiment of separate adjustment of tillage position and cutting angle,
Figures 18a - 18b illustrate likewise an alternative embodiment of separate adjustment of tillage position and cutting angle,
Figures 19a - 19b illustrate likewise an alternative embodiment of separate adjustment of tillage position and cutting angle,
Figures 20a - 20b illustrate simultaneous adjustment of cutting angle and tillage position with a power source,
Figures 21a - 21b show an alternative simultaneous adjustment of cutting angle and tillage position with a power source,
Figures 22a - 22b show a soil tillage entity with angled beams,
Figure 23 illustrates a soil tillage entity with four beams provided with disc entities.

### DETAILED DESCRIPTION

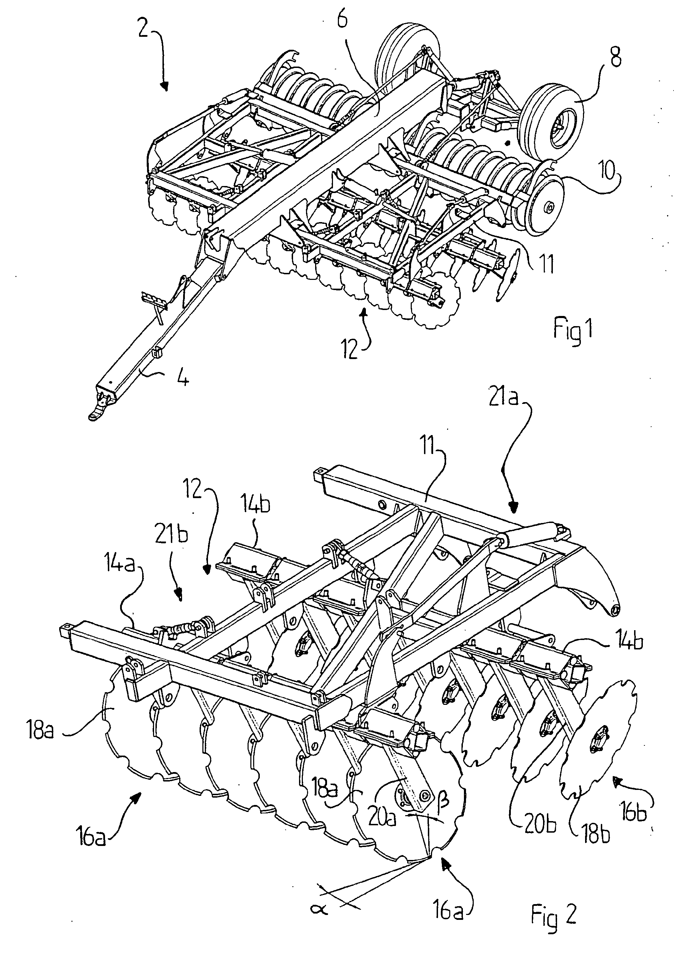

Figure 1 shows in perspective an agricultural machine 2 with a towing device 4 intended to be fixed to a towing vehicle, such as a tractor. An elongated beam 6 carries support wheels 8 for transport on road, roller rings 10 and a frame 11 for a soil tillage entity 12.

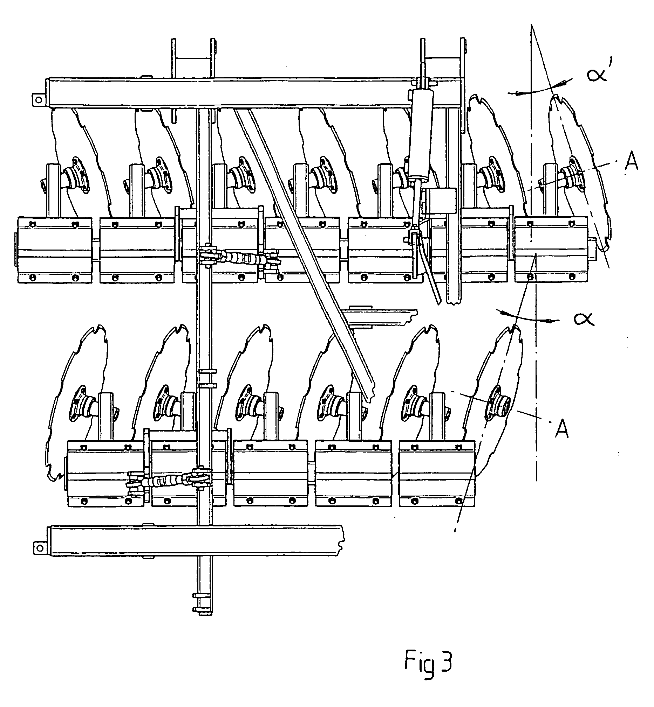

Figure 2 shows the soil tillage entity 12 comprising a pair of essentially parallel beams 14a, 14b with a plurality of disc entities 16a, 16b, each comprising a disc 18a, 18b rotatably arranged on an arm 20a, 20b about an axis **A** (see Figure 3). The discs 18a, 18b arranged behind each other in the direction of travel interact with each other and are flat but could alternatively be conical (see Figure 1), spherical or have other suitable form. The beams 14a, 14b are turnable by means of a turning device 21a and sideways displaceable by means of a displacing device 21b, which will be explained more fully below.

The disc entities 16a are linked by beam 14a and form one entity. The same applies for disc entities 16b and beam 14b.

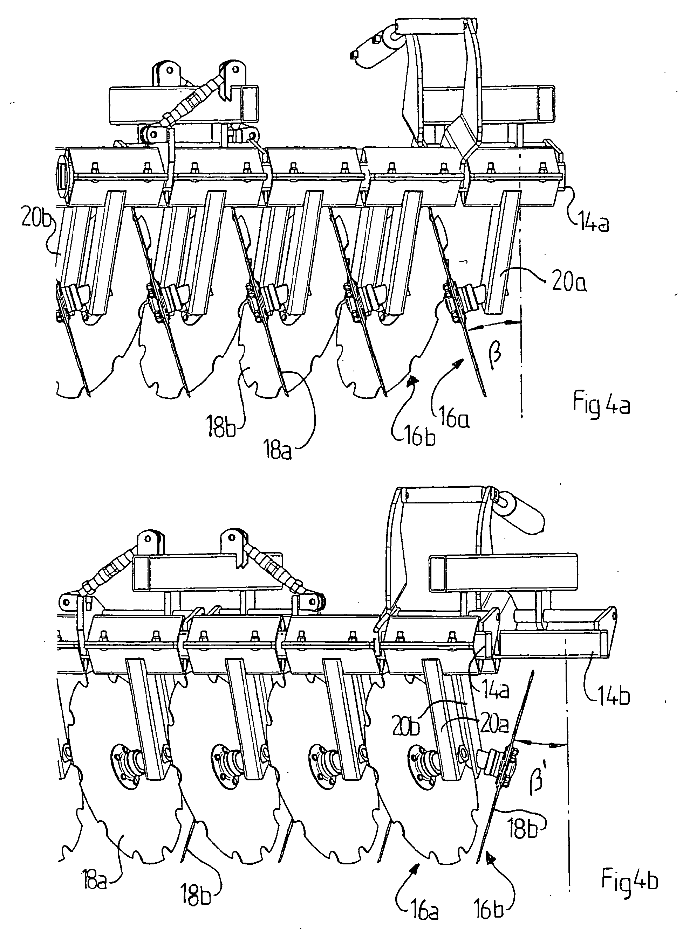

Disc 18a has a cutting angle α relative to the direction of travel (see also Figure 3) and an angle of incline β relative to the vertical plane (see also Figures 4a and 4b). The disc 18b that is behind disc 18a and that interacts with it has a corresponding cutting angle α' and an angle of incline β' but in the opposite direction. It should be noted that cutting angle α can of course be identical with cutting angle α', but they can equally well differ from each other by a lot or a little. The same applies for the angle of incline β, β' of the interacting discs 18a, 18b.

The cutting angle α, α' and the angle of incline β, β' can be combined in the expression tillage angle, which can be adjusted for adapting to the soil type to be tilled, the working depth, the presence of plants and plant residues on the surface and in the soil, the desired soil consistency after tillage, the driving speed, the fuel consumption rate, etc.

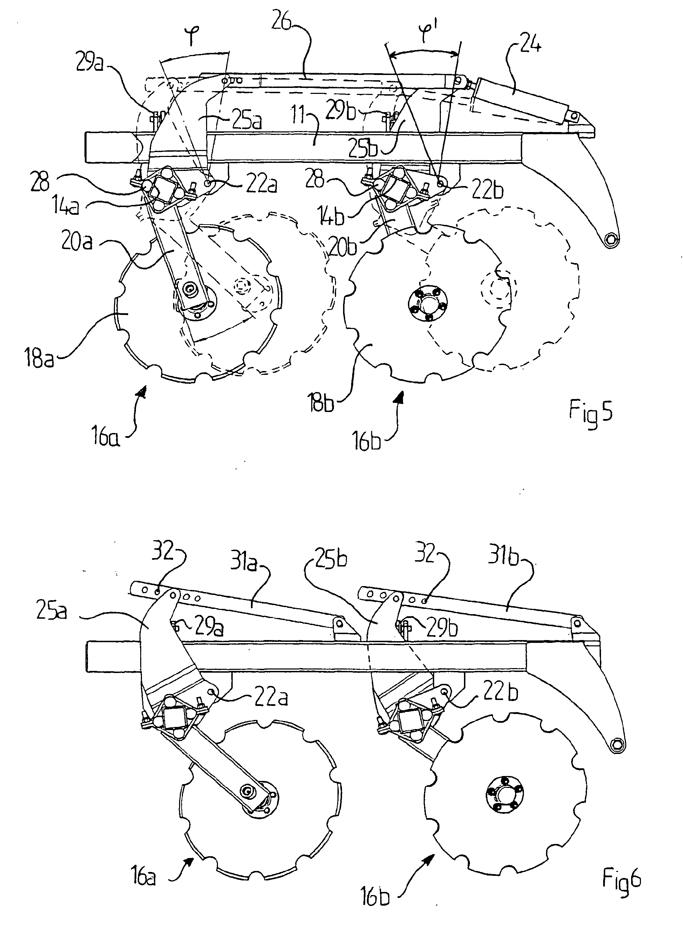

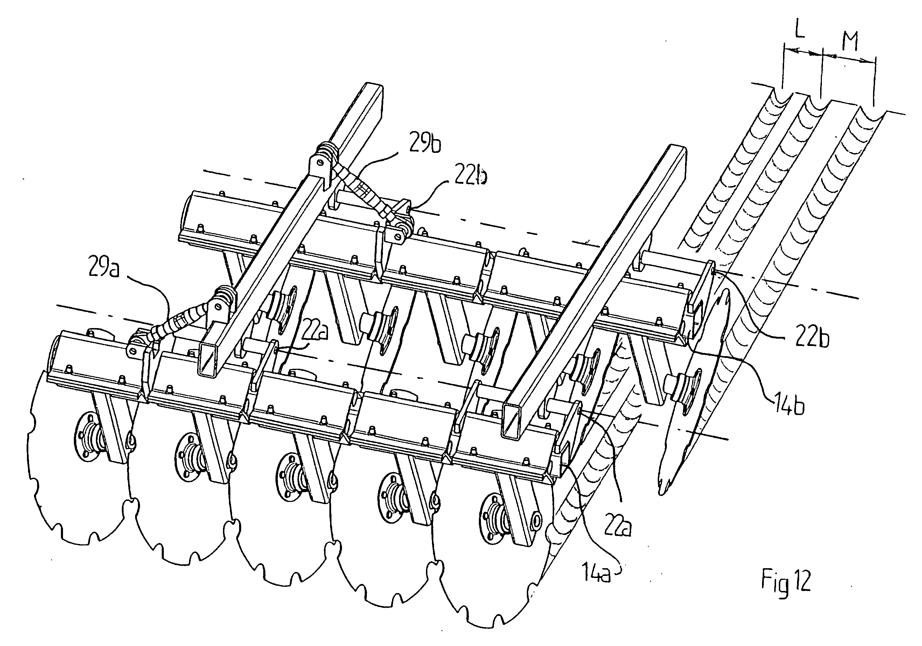

Figure 5 shows how the disc entities 16a, 16b are turnable around the respective axles 22a, 22b (see Figs 12, 13a and 14a). The different positions of the discs 18a, 18b before and after turning are shown as solid lines and dashed lines respectively. The turning is executed by a hydraulic cylinder 24 simultaneously affecting a moment arm 25b arranged on beam 14b, so that it together with the disc entity 16b can turn itself around the axle 22b, and a length-adjustable linking member 26, which links together the moment arms 25a, 25b on beams 14a and 14b, so that the disc entity 16a is also caused to turn around axle 22a. The turning produces a turning angle ϕ, ϕ'.

After turning, the vertically lowest point on discs 18a, 18b is a different one than after turning. This means in turn that both the cutting angle α, α' and the angle of incline β, β' are affected. The turning of the disc entities is thus a way to preset the tillage angles α, β, and α', β'.

The arms 20a, 20b are in a known way suspended on the respective beams 14a, 14b via rubber suspensions 28 to absorb turning motions. This type of turning motion is however not adjustable but depends on external factors, such as stones in the soil.

Partly hidden is shown a member 29a, 29b for execution of a movement along the respective beams 14a, 14b. This will be explained further below.

In the event of the disc entities on the one beam 14a being separately turnable, or turnable in groups, then of course every disc entity or group of disc entities can be provided with a moment arm, and be linked to a moment arm on the corresponding separately turnable or turnable in groups disc entities on the other beam 14b.

Figure 6 shows how the adjustment of the tillage angles α, β, and α', β', i.e. the turning angle ϕ, ϕ' for beams 14a and 14b (and thereby also the disc entities 16a, 16b) around the axle 22a, 22b can be executed separately for the respective disc entity 16a, 16b. Between the frame 30 of the soil tillage entity and the moment arms 25a, 25b of the beams 14a, 14b the adjusting members 31a, 31b are jointedly arranged. These are provided with openings 32 in which a pin or similar can be inserted for setting the desired turning angle of the respective disc entity 16a, 16b. Since beams 14a, 14b can be turned separately from each other, this means that the turning angles ϕ, ϕ' are not necessarily of the same size.

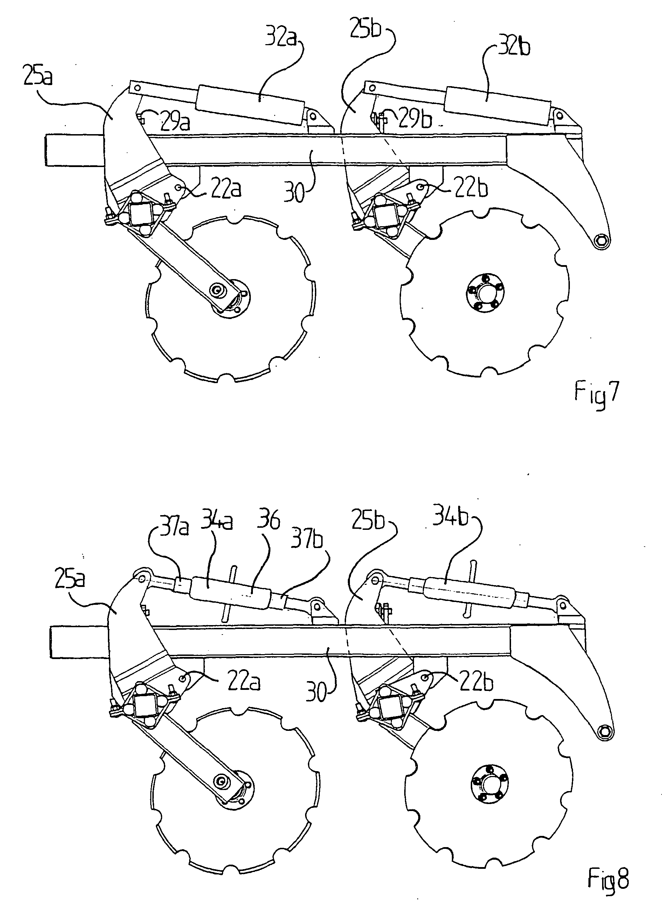

Figure 7 shows how adjustment of the tillage angles α, β, and α', β' is achieved by means of a hydraulic cylinder 32a, 32b arranged via joints between the frame 30 and the respective moment arm 25a, 25b.

Figure 8 shows how adjustment of the tillage angles α, β, and α', β' is achieved by means of a rigging screw 34a, 34b arranged between the frame 30 and the respective moment arm 25a, 25b of the disc entities 16a, 16b. Each rigging screw has by definition a threaded sleeve with a righthand thread in one end and a lefthand thread in the other. In the ends are respectively a righthand thread screw 37a and a lefthand thread screw 37b.

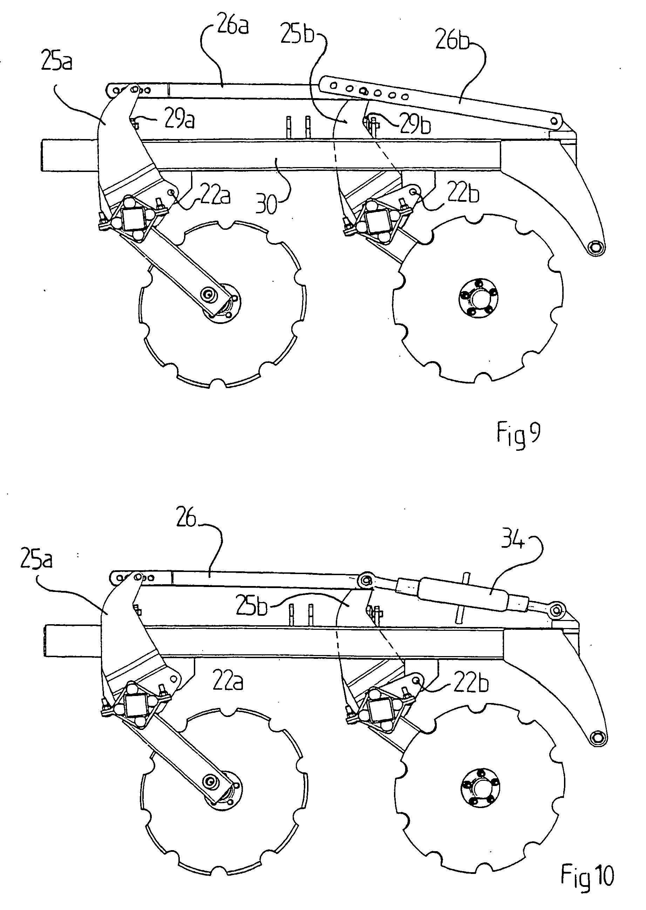

Figure 9 shows how adjustment of the tillage angles α, β, and α', β', of the disc entities 16a, 16b is achieved by means of a pair of linked adjusting members 26a, 26b. The adjusting member 26a has articulated connections to the moment arms 25a and 25b, while the adjusting member 26b has articulated connections to the moment arm 25b and the frame 30.

Figure 10 shows how adjustment of the tillage angles α, β, and α', β', of the respective disc entity is achieved by means of an adjusting member 26 that has articulated connections to the moment arms 25a and 25b and a rigging screw 34, that has articulated connections to the moment arm 25b and the frame 30.

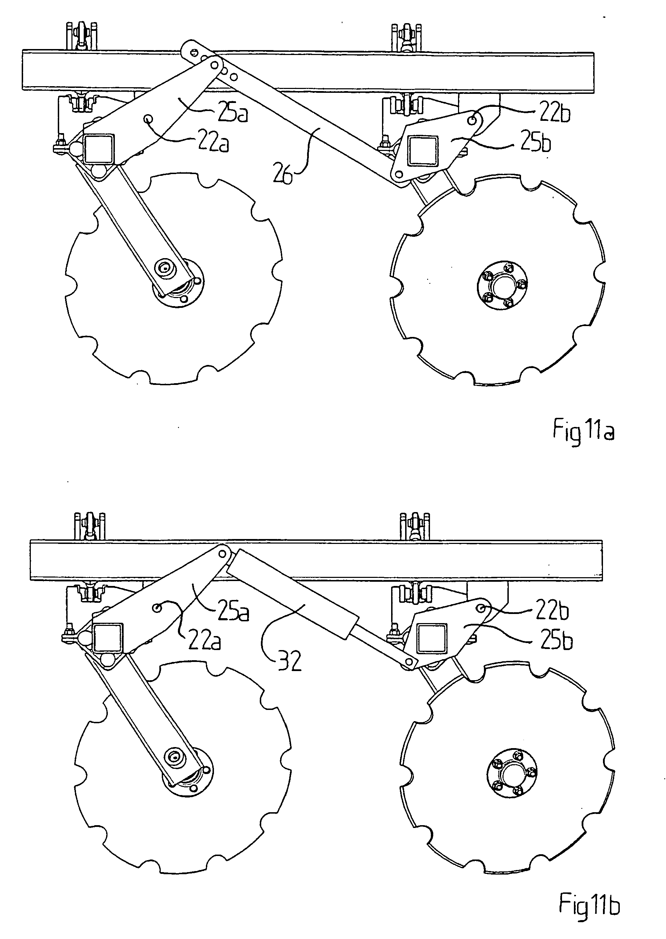

Figure 11a shows how adjustment of the tillage angles α, β and α', β', for the respective disc entity is achieved by means of a single adjusting member 26 that has articulated connections to the moment arms 25a and 25b.

Figure 11b shows in a corresponding way how adjustment of the tillage angles α, β, and α', β' for the respective disc entity is achieved by means of a single hydraulic cylinder 32 that has articulated connections to the moment arms 25a and 25b.

Figure 12 shows how the discs 18a, 18b interact and create furrows in the soil at relative spacings L. The distance to the nearest disc in the next interacting pair is denoted M.

Figure 12 also shows the members 29a, 29b that perform the movement along the resp. beam 14a, 14b, which will be explained further below.

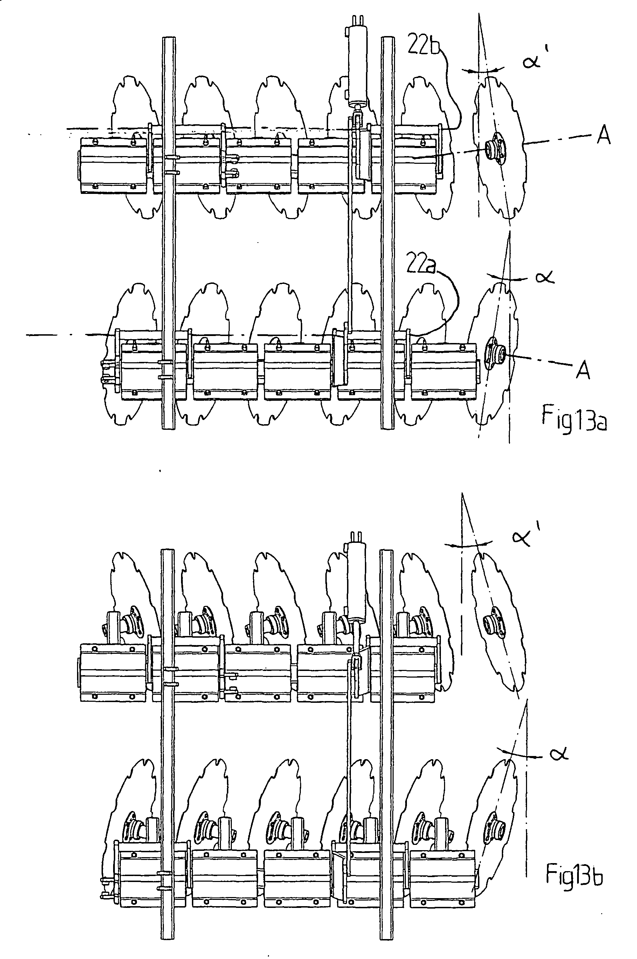

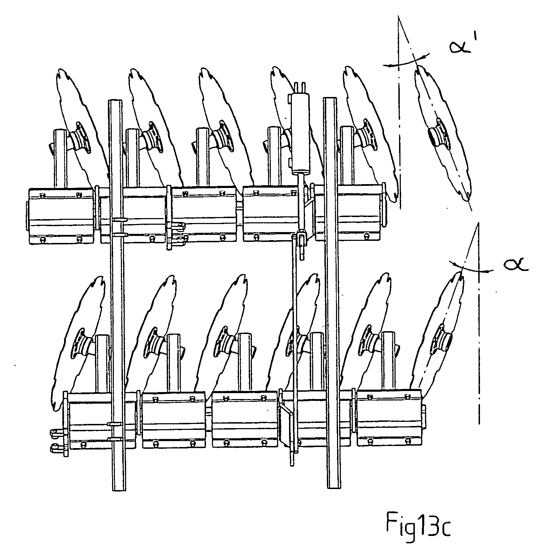

Figures 13a - 13c show how the cutting angle α, α' is affected for interacting discs 18a, 18b when the disc entities are turned so that the turning angle ϕ, ϕ' is affected. The cutting angle α, α' thus increases with increasing turning angle ϕ, ϕ'

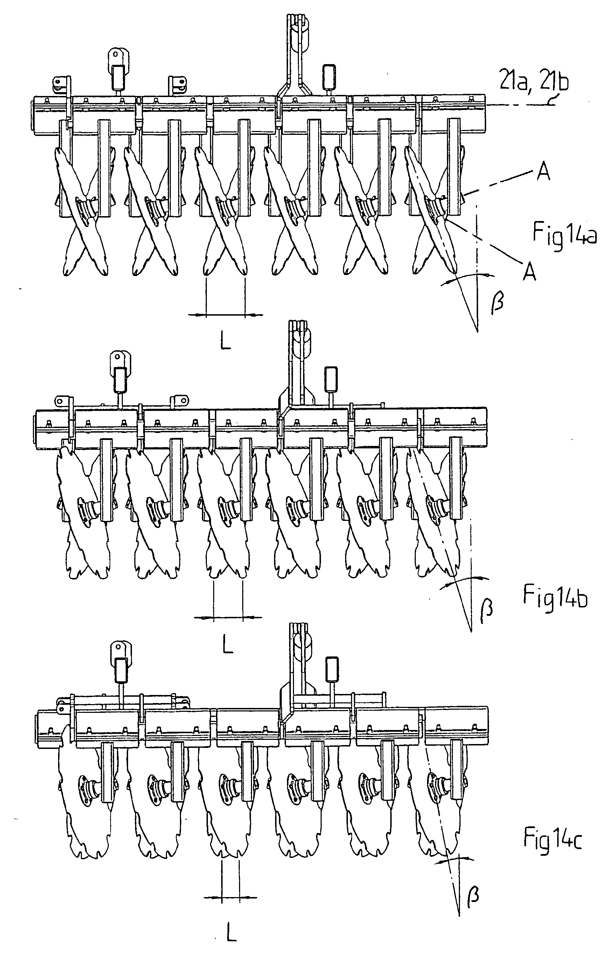

Figures 14a - 14c show how the angle of incline β, β' is affected for interacting discs 18a, 18b when the disc entities are turned so that the turning angle ϕ, ϕ' is affected. The angle of incline β, β' thus decreases with increasing turning angle ϕ, ϕ'.

By turning of the disc entities 16a, 16b, the spacing L between the vertically lowest point on interacting discs is also altered. This occurs without active sideways displacement of any of the beams, the sideways displacement is caused by the turning of the disc entities. Compare with what is stated above in connection with Figure 5 that the lowest point on the disc varies before and after turning.

This means therefore that the cutting angle α, α' can of course be adjusted simply by turning of the disc entities, but that this will have a negative effect on the tillage result, since the sideways spacing of the discs relative to each other is affected.

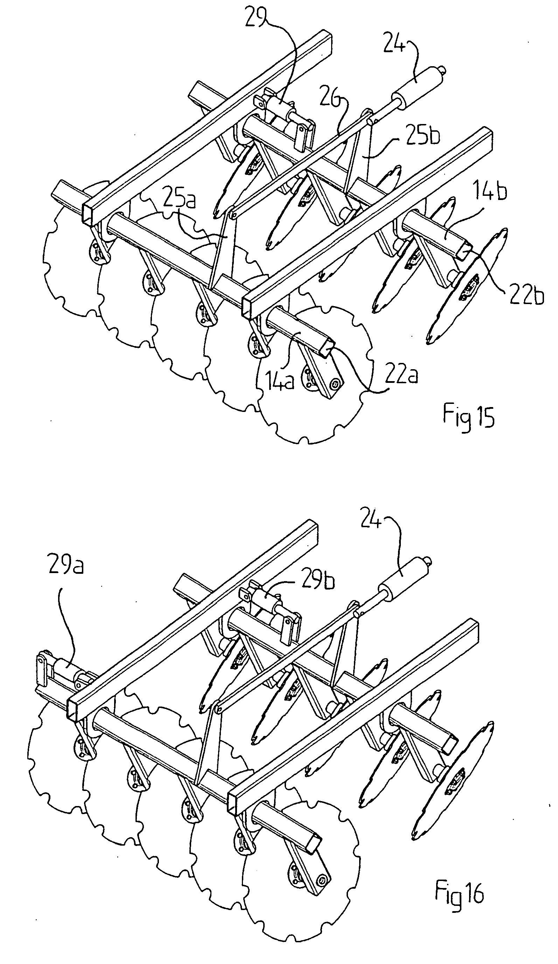

Figure 15 shows how compensation is made for the altered spacing L by the disc entities on one beam 14b being moved to the side by means of a member 29 for sideways displacement in the form of a hydraulic cylinder. The figure also shows an alternative turning axle 22a, 22b, which coincides with the extension of beam 14a, 14b (this also regards the embodiments of figures 16-18b). The turning movement of beams 14a, 14b, i.e. also the disc entities 16a, 16b, is achieved by a hydraulic cylinder 24 connected to moment arm 25b, which has in turn an articulated connection to moment arm 25a via linking member 26 (compare Fig. 5 above). The other end of the hydraulic cylinder 24 has an articulated connection to the frame 30.

Figure 16 shows how compensation is made for the shortened spacing by the disc entities on both the beams 14a, 14b being displaced sideways by two sideways displacing members 29a, 29b in the form of hydraulic cylinders.

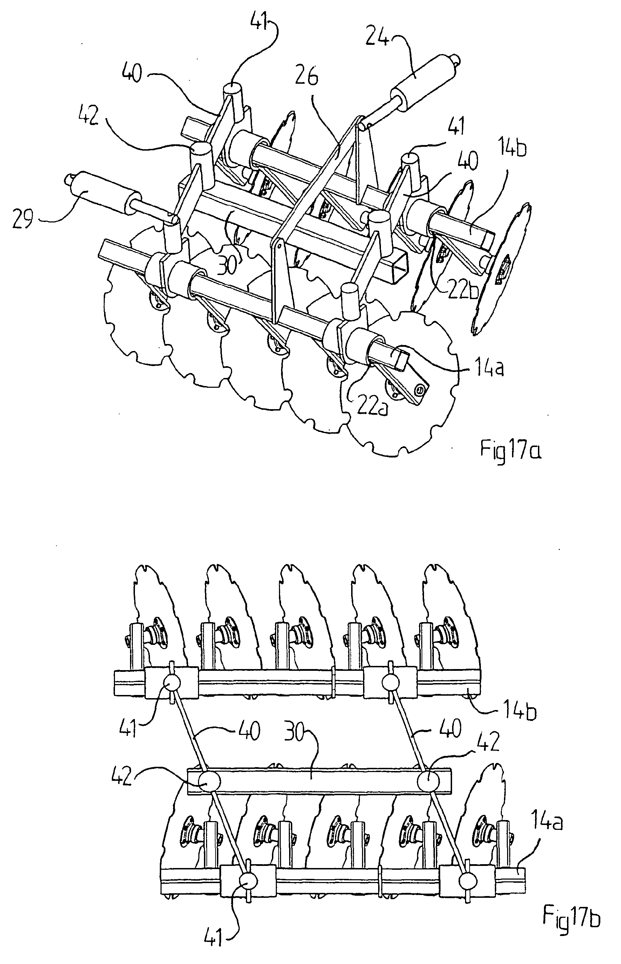

Figures 17a and 17b show how the beams 14a, 14b are linked by parallel rods 40 via joints 41. The frame 30 is provided with a pair of joints 42, around which the parallel rods 40 are jointed, for example at the mid-point of the parallel rods. The hydraulic cylinder 29 (not shown in Figure 17b for the sake of clarity) affects the parallel rods 40 in such a way that they are forced to rotate around their respective joint 42, which in turn affects the displacement of the beams 14a, 14b relative to each other, so that the desired adjustment of the spacing between interacting disc entities is achieved. The hydraulic cylinder 24 (not shown in Figure 17b for the sake of clarity), as described above in connection with Figure 5, executes turning of the disc entities.

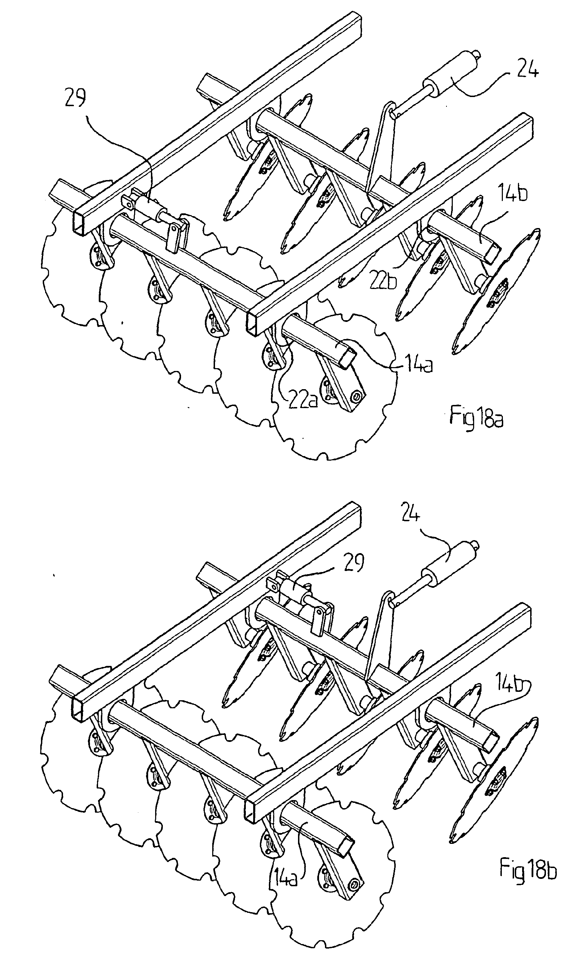

Figure 18a shows the use of a cylinder 29 for sideways displacement of the beam 14a and a cylinder 24 for turning of the beam 14b.

Figure 18b shows instead the use of a cylinder 24 for turning of beam 14b and a cylinder 29 for sideways displacement of the same beam 14b, while beam 14a remains unaffected. Alternatively the cylinders 24 and 29 are used for turning and sideways displacement of beam 14a, while beam 14b remains unaffected.

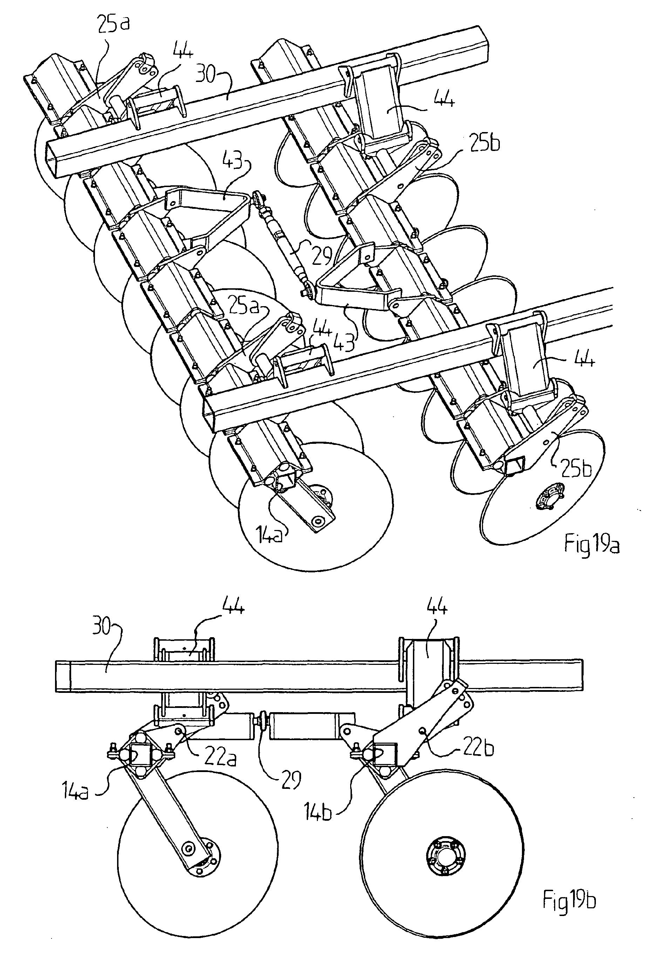

Figures 19a and 19b show how beams 14a and 14b are suspended on the frame 30 via linking members 44. Beams 14a and 14b are also linked to each other by means of the rigging screw 29 via jointed first linking member 43. Adjustment of the turning angle ϕ, ϕ' of the disc entities is achieved by adjusting the moment arms 25a, 25b. The sideways displacement, i.e. adjustment of the spacing L, is achieved by adjustment of the rigging screw 29, which together with the jointed second linking member 44 causes a displacement of beam 14a relative to beam 14b. The rigging screw 29 can of course by replaced by a hydraulic cylinder.

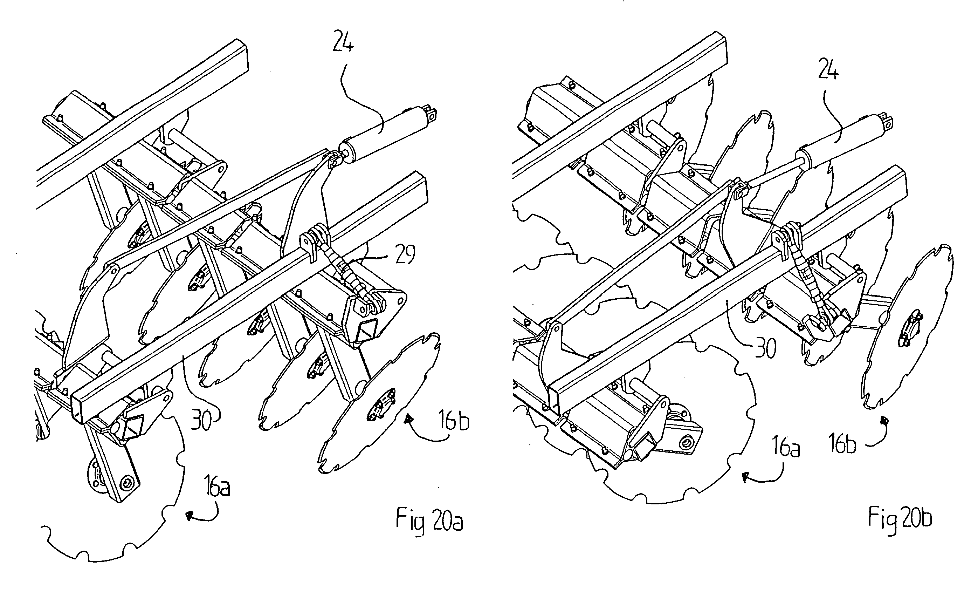

Figures 20a and 20b show with increasing turning angle ϕ, ϕ' how turning and sideways displacement are achieved with a single cylinder 24. Hereby the rigging screw 29, which is jointed to the frame 30 of the soil tillage entity and to beam 14b, forces sideways displacing of beam 14b while the disc entities 16a, 16b are being turned.

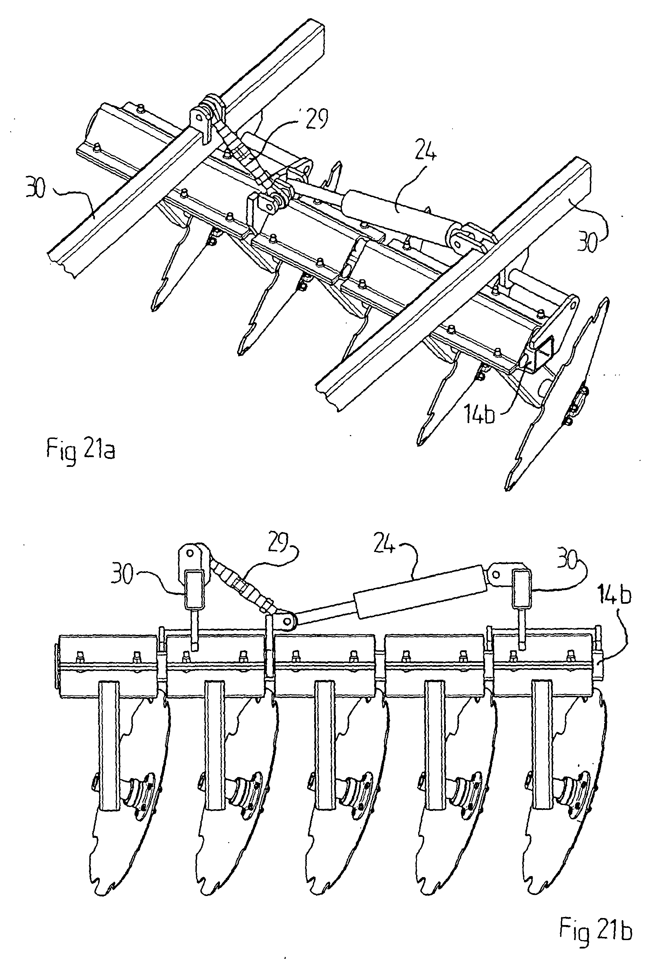

Figures 21a and 21b show how turning and sideways displacement are achieved with a single hydraulic cylinder 24 in an alternative way. The hydraulic cylinder 24 is jointed to the frame 30 of the soil tillage entity and to beam 14b. The rigging screw 29 is likewise jointed to the frame 30 of the soil tillage entity and to beam 14b. During operation of the hydraulic cylinder 24, this presses beam 14b so that it is displaced sideways. At the same time, the rigging screw 29 forces beam 14b to be turned together with the disc entities 16a, 16b.

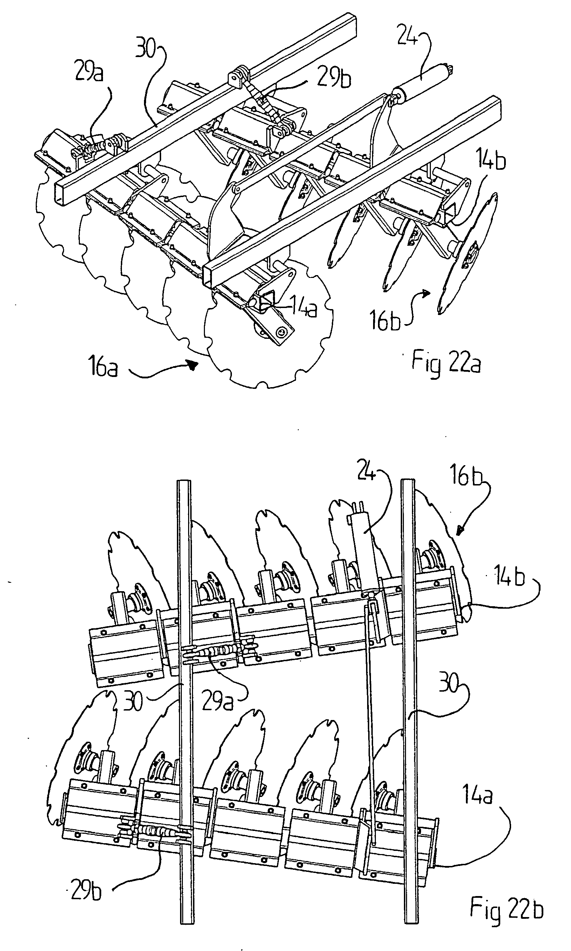

Figures 22a and 22b show two beams at angles to each other, and provided with disc entities 16a, 16b. When beams 14a, 14b are turned, the beams are displaced sideways by means of the rigging screws 29a, 29b. Thanks to the angle that the beams have relative to each other, adjustment of the spacing L does not require as great a sideways displacement of the disc entities 16a, 16b as for parallel beams.

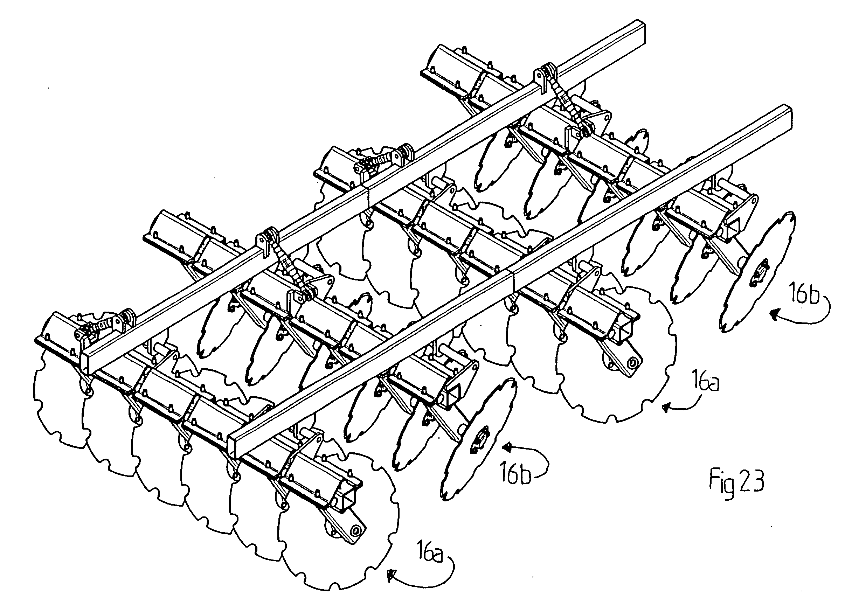

Figure 23 shows how four rows of disc entities 16a, 16b are arranged behind each other.

For all the above embodiments, it is a prerequisite that the angle between the axle of rotation 22a, 22b of the disc entity 16a, 16b and the axis of rotation A of its disc 18a, 18b is other than 0°.

In the embodiments exemplified above, it is only illustrated that all disc entities are turned together with their respective beam. Of course the beam could be provided with disc entities that are separately turnable, or only together with the corresponding interacting disc entity on the other beam. The disc entities can also be turnable separately or in groups around a fixed beam. Alternatively, groups of discs on the same beam can be turnable independently of each other or together with corresponding groups on the other beam. Furthermore, two or more soil tillage entities can be placed beside each other.

Figures 5 - 11b show different ways to turn beams 14a, 14b with disc entities 16a, 16b. Of course, any one of these can be used together with the different variants of sideways displacement shown in Figures 12 and 15 - 22b. Likewise, all the variants described above can be arranged in the constellation shown in Figure 23.

The hydraulic cylinders described above are of course adjustable, for example from a control panel on the agricultural implement or in a towing vehicle.

## Claims

1. A soil tillage entity comprising at least two essentially horizontal beams (14a, 14b) intended to be arranged at an angle to the direction of travel during soil tillage, at least one disc entity (16a, 16b) with a disc (18a, 18b) for soil tillage arranged on the respective beam (14a, 14b), wherein the said discs (18a, 18b) are arranged essentially behind one another in the direction of travel for interacting soil tillage, and wherein the angle (α, α') of at least one of the discs relative to the direction of travel is adjustable, **characterised in that** a turning device (21a) is adapted to turn at least one of the disc entities (16a, 16b) around an essentially horizontal axle (22a, 22b) for adjustment of the tillage angle (α, β; α', β') of the discs, and that a displacing device (21b) is adapted to displace at least one of the disc entities (16a, 16b) essentially along the lengthwise extension of the said beam (14a, 14b), for adjustment of the tillage position (L) of the discs relative to one another, wherein the axle of rotation (22a, 22b) of the disc entity (16a, 16b) and the axis of rotation (A) of its disc (18a, 18b) are not parallel.

2. A soil tillage entity according to Claim 1, wherein the said displacement for at least one of the disc entities (16a, 16b) occurs in one movement together with the turning.

3. A soil tillage entity according to Claim 1, wherein the said displacement for at least one of the said disc entities (16a, 16b) occurs separately from the said turning.

4. A soil tillage entity according to any one of the preceding claims, wherein the turning device (21a) comprises at least one turning means (24) for execution of the turning movement, and that the displacing device (21b) comprises at least one lateral displacement member (29; 29a; 29b) for execution of the displacing movement.

5. A soil tillage entity according to Claim 1, wherein one lateral displacement member (29) is arranged in such a way that the said turning and the said displacing are executed in one movement.

6. A soil tillage entity according to Claim 5, comprising a turning means (24) for execution of the turning movement and the displacing movement.

7. A soil tillage entity according to any one of the preceding claims, wherein the turning device (21a) is adapted to turn one disc entity (16a) and that the displacing device (21b) is adapted to displace the other disc entity (16b).

8. A soil tillage entity according to any one of Claims 1 - 6, wherein the turning device (21a) is adapted to turn one disc entity (16a) and that the displacing device (21b) is adapted to displace the same disc entity (16a).

9. A soil tillage entity according to any one of Claims 1 - 6, wherein the turning device (21a) is adapted to turn and displace both the one and the other disc entity (16a, 16b).

10. An agricultural machine comprising at least one soil tillage entity according to any one of the preceding claims.

## Patentansprüche

1. Bodenbearbeitungsvorrichtung, die mindestens zwei im Wesentlichen horizontale Trägerbalken (14a, 14b), die dazu vorgesehen sind, in einem Winkel zur Bewegungsrichtung während der Bodenbearbeitung angeordnet zu werden, mindestens eine Scheibenvorrichtung (16a, 16b) mit einer Scheibe (18a, 18b) zur Bodenbearbeitung, die am entsprechenden Trägerbalken (14a, 14b) angeordnet ist, wobei die Scheiben (18a, 18b) im Wesentlichen hintereinander in Richtung der Bewegung zum Bewirken einer Bodenbearbeitung angeordnet sind und wobei der Winkel (α, α') von mindestens einer der Scheiben relativ zur Bewegungsrichtung einstellbar ist, umfasst,
**dadurch gekennzeichnet, dass**
eine Drehvorrichtung (21a) geeignet ist, mindestens eine der Scheibenvorrichtungen (16a, 16b) um eine im Wesentlichen horizontale Achse (22a, 22b) zu drehen, um den Bearbeitungswinkel (α, β, α', β') der Scheiben einzustellen und dass eine Verlagerungsvorrichtung (21b) geeignet ist, mindestens eine der Scheibenvorrichtungen (16a, 16b) im Wesentlichen entlang der Längserstreckung des Trägerbalkens (14a, 14b) zu verlagern, um die Beabreitungsposition (L) der Scheiben relativ zueinander einzustellen, wobei die Drehachse (22a, 22b) der Scheibenvorrichtung (16a, 16b) und die Drehachse (A) ihrer Scheibe (18a, 18b) nicht parallel sind.

2. Bodenbearbeitungsvorrichtung gemäß Anspruch 1, wobei die Verlagerung von mindestens einer der Scheibenvorrichtungen (16a, 16b) in einer Bewegung zusammen mit dem Drehen erfolgt.

3. Bodenbearbeitungsvorrichtung gemäß Anspruch 1, wobei die Verlagerung von mindestens einer der Scheibenvorrichtungen (16a, 16b) getrennt vom Drehen erfolgt.

4. Bodenbearbeitungsvorrichtung gemäß einem der vorhergehenden Ansprüche, wobei die Drehvorrichtung (21a) mindestens eine Drehvorrichtung (24) zum Ausführen der Drehbewegung umfasst, und dass die Verlagerungsvorrichtung (21b) zumindest ein seitliches Verlagerungselement (29; 29a; 29b) zum Ausführen der Verlagerungsbewegung umfasst.

5. Bodenbearbeitungsvorrichtung gemäß Anspruch 1, wobei ein seitliches Verlagerungselement (29) so angeordnet ist, dass das Drehen und das Verlagern in einer Bewegung ausgeführt werden.

6. Bodenbearbeitungsvorrichtung gemäß Anspruch 5, die eine Drehvorrichtung (24) zum Ausführen der Drehbewegung und der Verlagerungsbewegung umfasst.

7. Bodenbearbeitungsvorrichtung gemäß einem der vorhergehenden Ansprüche, wobei die Drehvorrichtung (21a) angebracht ist, eine Scheibenvorrichtung (16a) zu drehen und dass die Verlagerungsvorrichtung (21b) geeignet ist, die andere Scheibenvorrichtung (16b) zu verlagern.

8. Bodenbearbeitungsvorrichtung gemäß einem der Ansprüche 1-6, wobei die Drehvorrichtung (21a) geeignet ist, eine Scheibenvorrichtung (16a) zu drehen und dass die Verlagerungsvorrichtung (21b) geeignet ist, dieselbe Scheibenvorrichtung (16a) zu verlagern.

9. Bodenbearbeitungsvorrichtung gemäß einem der Ansprüche 1-6, wobei die Drehvorrichtung (21a) geeignet ist, die eine und die andere Scheibenvorrichtung (16a, 16b) zu drehen und zu verlagern.

10. Landwirtschaftliche Maschine, die mindestens eine Bodenbearbeitungsvorrichtung gemäß einem der vorhergehenden Ansprüche umfasst.

## Revendications

1. Dispositif de labourage du sol comprenant au moins deux poutres (14a, 14b) essentiellement horizontales destinées à être agencées selon un angle par rapport au sens de déplacement pendant le labourage du sol, au moins une entité de disques (16a, 16b) avec un disque (18a, 18b) pour le labourage du sol agencé sur la poutre (14a, 14b) respective, lesdits disques (18a, 18b) étant disposés essentiellement les uns derrière les autres dans le sens de déplacement pour interagir pendant le labourage du sol et l'angle (α, α') d'au moins un des disques par rapport au sens de déplacement pouvant être réglé, **caractérisé en ce qu'**un dispositif rotatif (21a) est conçu pour faire tourner au moins une des entités de disques (16a, 16b) autour d'un axe essentiellement horizontal (22a, 22b) pour le réglage de l'angle de labourage (α, β ; α', β') des disques, et **en ce qu'**un dispositif de déplacement (21b) est conçu pour déplacer au moins une des entités de disques (16a, 16b) essentiellement le long de l'extension longitudinale de ladite poutre (14a, 14b) pour le réglage de la position de labourage (L) des disques les uns par rapport aux autres, l'axe de rotation (22a, 22b) de l'entité de disques (16a, 16b) et l'axe de rotation (A) de son disque (18a, 18b) n'étant pas parallèles.

2. Dispositif de labourage du sol selon la revendication 1, dans lequel ledit déplacement pour au moins une des entités de disques (16a, 16b) a lieu dans un seul mouvement intégrant la rotation.

3. Dispositif de labourage du sol selon la revendication 1, dans lequel ledit déplacement pour au moins une desdites entités de disques (16a, 16b) a lieu séparément de ladite rotation.

4. Dispositif de labourage du sol selon l'une quelconque des revendications précédentes, dans lequel le dispositif rotatif (21a) comprend au moins un moyen rotatif (24) permettant d'exécuter le mouvement de rotation, et en ce que le dispositif de déplacement (21b) comprend au moins un élément de déplacement latéral (29 ; 29a ; 29b) permettant d'exécuter le mouvement de déplacement.

5. Dispositif de labourage du sol selon la revendication 1, dans lequel un élément de déplacement latéral (29) est agencé de telle sorte que ladite rotation et ledit déplacement sont exécutés en un mouvement.

6. Dispositif de labourage du sol selon la revendication 5, comprenant un moyen rotatif (24) permettant d'exécuter le mouvement de rotation et le mouvement de déplacement.

7. Dispositif de labourage du sol selon l'une quelconque des revendications précédentes, dans lequel le dispositif rotatif (21a) est conçu pour faire tourner une entité de disques (16a) et en ce que le dispositif de déplacement (21b) est conçu pour déplacer l'autre entité de disques (16b).

8. Dispositif de labourage du sol selon l'une quelconque des revendications 1 à 6, dans lequel le dispositif rotatif (21a) est conçu pour faire tourner une entité de disques (16a) et en ce que le dispositif de déplacement (21b) est conçu pour déplacer la même entité de disques (16a).

9. Dispositif de labourage du sol selon l'une quelconque des revendications 1 à 6, dans lequel le dispositif rotatif (21a) est conçu pour faire tourner et déplacer l'une et l'autre entités de disques (16a, 16b).

10. Machine agricole comprenant au moins un dispositif de labourage du sol selon l'une quelconque des revendications précédentes.
